# EUROPEAN PATENT SPECIFICATION

(11) **EP 1 329 121 B1**
(45) Date of publication and mention of the grant of the patent: **12.08.2009**
(21) Application number: 01937120.2
(22) Date of filing: 05.06.2001
(51) Int. Cl.: H04W 8/12

(54) **METHOD AND MEANS FOR PROVIDING ENHANCED SUBSCRIBER IDENTITY CONFIDENTIALITY DURING ROMING IN A CELLULAR RADIO COMMUNICATION SYSTEM**
VERFAHREN UND MITTEL ZUR BEREITSTELLUNG EINER VERBESSERTEN TEILNEHMERIDENTITÄTSVERTRAULICHKEIT BEIM ROAMING IN EINEM ZELLULARFUNKKOMMUNIKATIONSSYSTEM
PROCEDE ET MOYEN PERMETTANT D'ASSURER LA CONFIDENTIALITE DE L'IDENTITE DE L'ABONNE ACCRUE PENDANT LE DEPLACEMENT DANS UN SYSTEME DE RADIOCOMMUNICATION CELLULAIRE

(30) Priority: 24.10.2000 SE 0003920
(43) Date of publication of application: 23.07.2003
(73) Proprietor: TELEFONAKTIEBOLAGET LM ERICSSON (publ), 164 83 Stockholm (SE)
(72) Inventor: ARVIDSSON, Aake, S-372 37 Ronneby (SE); WILLGERT, Mikael, S-163 54 Spånga (SE); LAIHO, Keijo, FIN-02430 Masala (FI); NISKA, Haakan, S-589 35 Linköping (SE); TOIVANEN, Kyösti, FIN-02400 Kyrkslätt (FI)
(74) Representative: Kribber, Klaus-Dieter
(86) International application number: PCT/SE2001/001274
(87) International publication number: WO 2002/035878

(56) References cited:
- WO-A1-00/67499
- WO-A2-98/32303
- WO-A2-98/47303
- WO-A2-99/34635
- US-A- 6 119 000

## Description

### TECHNICAL FIELD OF THE INVENTION

The present invention relates in general to the field of cellular radio communication and, in particular, to a method and means for providing enhanced subscriber identity confidentiality during roaming in a cellular radio communication system with at least one pool of core network nodes.

### DESCRIPTION OF RELATED ART

A cellular radio communication system is normally divided into an access network and a core network. The access network in GSM includes the Base Transceiver Stations (BTS) and control nodes such as the Base Station Controller (BSC) while the core network includes core network nodes (CNN) such as the Mobile Switching Centre (MSC), the Visiting Location Register (VLR), the Home Location Register (HLR) and also the GPRS Support Node (GSN) if General Packet Radio Service (GPRS) is included in the system. An example of a GSN is the Serving GPRS Support Node (SGSN).

The next generation cellular radio communication system, i.e. the 3^{rd} generation, is called IMT 2000 by ITU (the International Telecommunication Union) and includes the Universal Mobile Telecommunications System (UMTS). The access network in UMTS includes the base transceiver stations (Node B) and control nodes such as the Radio Network Controller (RNC) while the core network includes the same types of nodes as the GSM system (as described above).

Each control node in the access network (BSC or RNC) is served by one specific MSC and each MSC in the core network is served by one specific VLR in known GSM and UMTS systems. This means that each control node always communicates with one dedicated MSC that serves a specific geographical area of the cellular system, i.e. an MSC Service Area and that each MSC always communicates with one dedicated VLR. When a mobile station requests a service from the cellular system it will be connected to the MSC of the current MSC Service Area by one of the control nodes. The subscriber information of the mobile subscriber, that is using the mobile station, is stored in the VLR that serves the MSC, i.e. the mobile subscriber is registered in this VLR. It is a common practice to combine the VLR with the MSC into an MSC/VLR, which means that the mobile subscriber is registered in an MSC/VLR. Due to the fact that the mobile subscriber is using a mobile station it is also common to say that the mobile station is registered in the MSC/VLR.

When a mobile station moves in the cellular radio communication system in such a way that it needs to move the registration of the mobile subscriber from one core network node to another it is referred to as roaming in this document, e.g. to move the registration of the mobile subscriber (or mobile station) from a first MSC/VLR to a second MSC/VLR. The first MSC/VLR is called the old or the previous MSC/VLR and the second MSC/VLR is called the new MSC/VLR. Correspondingly, the registration of the mobile subscriber may need to be moved from one SGSN to another SGSN if the mobile station supports GPRS. This is similar as the roaming between MSC/VLR's. The first SGSN is called the old or the previous SGSN and the second SGSN the new SGSN. Hence, to move the registration between any type of core network node in the system is included in the word roaming in this document.

A proposed new type of architecture for a cellular radio communication system is to create a pool of core network nodes, e.g. a pool of MSC/VLR's, that is connected to one or more access networks, e.g. to control nodes, in the system. This means that each control node can access a number of MSC/VLR's and that an MSC/VLR in a pool of MSC/VLR's can serve a mobile station in a larger geographical area than in a "normal" MSC service area. This service area that is supported by all MSC/VLR's in the MSC-pool is called MSC-pool service area. In this case, the MSC service area of each MSC/VLR in the pool will be the same area as the MSC-pool service area. A pool of core network nodes is also called a CNN-pool. If it is a pool of MSC/VLR's it is called an MSC-pool for simplicity and if it is a pool of SGSN's it is called an SGSN-pool. This new architecture will reduce the amount of inter MSC handovers, reduce the amount of inter MSC/VLR Location Updates and reduce the amount of inter SGSN Routing Area Updates. This new architecture will also provide an easy and smooth way to add (e.g. to increase capacity) or remove (e.g. for maintenance) MSC/VLR's, SGSN's or other types of core network nodes arranged in a pool in the cellular system.

When a mobile station roams from a previous MSC service area (supported by a previous MSC/VLR) to a new MSC service area (supported by a new MSC/VLR) in a GSM network, it performs location updating towards the new MSC/VLR. The mobile station will use a Temporary Mobile Subscriber Identity (TMSI) to identify the mobile subscriber during the location updating (if it is available in the memory of the mobile station) together with the previous location area information indicating where the mobile station is coming from. The new MSC/VLR, which receives the location updating from the mobile station, needs the real identity of the mobile subscriber, i.e. the International Mobile Subscriber Identity (IMSI), to be able to identify the mobile subscriber properly. As one alternative, the new MSC/VLR may send a request for the IMSI directly to the mobile station, which responds by transmitting the IMSI over the air interface during the location updating procedure. The transmission of the IMSI over the air interface is. however, not recommended, because it will decrease the subscriber identity confidentiality. As a better alternative, the new MSC/VLR may send a request for the IMSI to the previous MSC/VLR, which can transmit its response with the IMSI without using the air interface. The new MSC/VLR will base the addressing of the previous MSC/VLR on the received previous location area information, while the addressing of the mobile subscriber within the previous MSC/VLR is based on the received TMSI.

If a mobile station roams from an MSC-pool service area to an MSC service area (or even to another MSC-pool service area), the new MSC/VLR in the new service area can not identify the previous MSC/VLR within the previous MSC-pool service area based on the location area information only. This is because all of the MSC/VLR's in the MSC-pool serve the same location areas and theoretically any one of the MSC/VLR's in the MSC-pool could have been the previous MSC/VLR. This leads to the situation where the new MSC/VLR needs to request the IMSI directly from the mobile station over the air interface, which results in a low subscriber identity confidentiality. Hence, there is a need for a method and means to enable the new MSC/VLR to collect the IMSI without using the air interface to enhance the subscriber identity confidentiality during roaming from an MSC-pool.

By a mobile station is meant all portable equipment intended for radio communication, like mobile stations, transceivers, pagers, electronic notebooks, laptops with integrated radios, communicators, tailored microchips connected to radios or any other portable electronic equipment that is using a radio link as a means of communication.

US 6119000 refers to a method of tracking identity-code changes in a communications system. A signaling subsystem is monitored to detect a first message, from which the identity-code is extracted. The signaling subsystem is monitored further to detect a second message related to the same communication transaction as the first message. Upon detection of the second message, the identity-code specified therein is recorded corresponding to the identity code extracted from the first message.

### SUMMARY

The present invention meets a problem related to a cellular radio communication system, and in particular, to roaming in a cellular radio communication system where a pool of core network nodes (e.g. MSC/VLR's) is arranged to serve at least one access network.

The problem is that a new core network node, arranged outside a CNN-pool, can not identify a previous core network node, arranged in the CNN-pool, to collect subscriber information, when a mobile station roams from the previous core network node to the new core network node.

In light of the foregoing, a primary object of the present invention is to provide a method and means to enable the new core network node to collect the subscriber information from the previous core network node in the CNN-pool during roaming.

Accordingly, the present invention provides a method as claimed in claim 1.

The present invention also provides a subscriber identification service node as claimed in claim 8.

Embodiments of the present invention are characterised as it appears from the sub-claims.

An advantage with the present invention is that it gives the same level of subscriber identity confidentiality for a CNN-pool system as for a system without a CNN-pool. This is because the mobile station does not need to transmit the IMSI over the radio interface when it roams from a pool of core network nodes.

A further advantage is that the signalling in connection with roaming etc. can be made more flexible.

A still further advantage is that the invention could be used to facilitate a move of subscriber registrations from a first MSC/VLR to a second MSC/VLR, where the second MSC/VLR is arranged in the same CNN-pool as the first MSC/VLR or outside said CNN-pool.

### BRIEF DESCRIPTION OF THE DRAWINGS

Figure 1 is illustrating a view of a known GSM system.
Figure 2a is illustrating a view of a first cellular radio communication system with a pool of core network nodes.
Figure 2b is illustrating a view of a second cellular radio communication system with a pool of core network nodes.
Figure 3 is illustrating a view of a third cellular radio communication system with a number of core network nodes arranged in a pool and a core network node arranged outside the pool.
Figure 4 is illustrating a simplified block diagram of a SISN connected to a pool of core network nodes according to the present invention.
Figure 5 is illustrating a simplified block diagram of a SISN according to the present invention.
Figure 6 is illustrating a flow chart of a first embodiment of the method according to the present invention.
Figure 7 is illustrating a signaling scheme of the first embodiment of the method according to the present invention.

### DETAILED DESCRIPTION OF EMBODIMENTS

The present invention relates to a method and means for subscriber identity confidentiality during roaming in a cellular radio communication system.

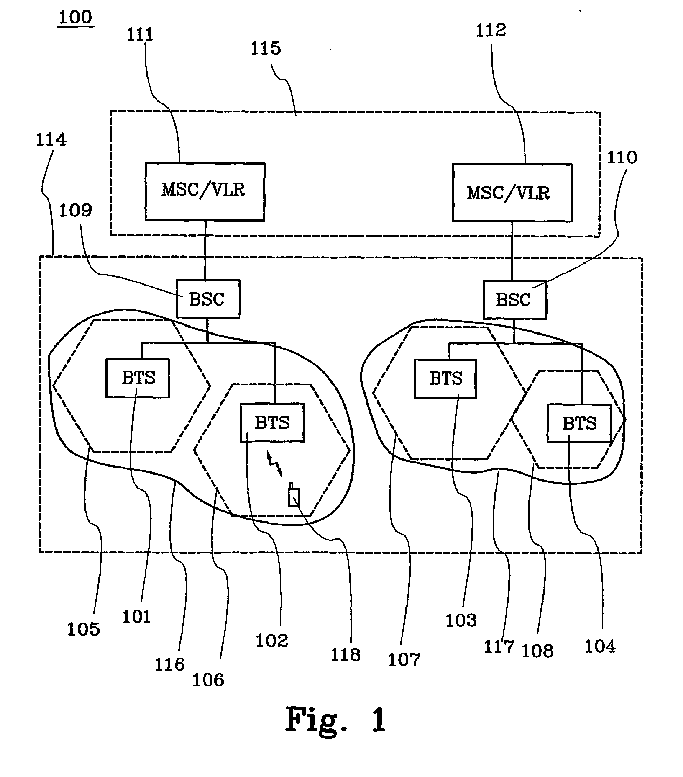

Figure 1 illustrates a simplified view of a known GSM system 100. The GSM system 100 includes four Base Transceiver Stations (BTS) 101-104, which are serving one cell 105-108 each. BTS 101 and 102 are connected to a first Base Station Controller (BSC) 109, i.e. a first control node, and BTS 103 and 104 are connected to a second Base Station Controller (BSC) 110, i.e. a second control node. The first BSC is connected to a first MSC/VLR 111 and the second BSC 110 is connected to a second MSC/VLR 112. Cell 105 and 106 cover the MSC Service Area 116 of MSC/VLR 111 and cell 107 and 108 cover the MSC Service Area 117 of MSC/VLR 112. The BTS 101-104 and BSC 109-110 are access network nodes and part of the access network 114 and the MSC/VLR 111-112 are core network nodes and part of the core network 115. A Mobile Station 118 in communication with BTS 102 is also illustrated in cell 106. The MSC/VLR 111 and MSC/VLR 112 are connected to Home Location Registers (not illustrated).

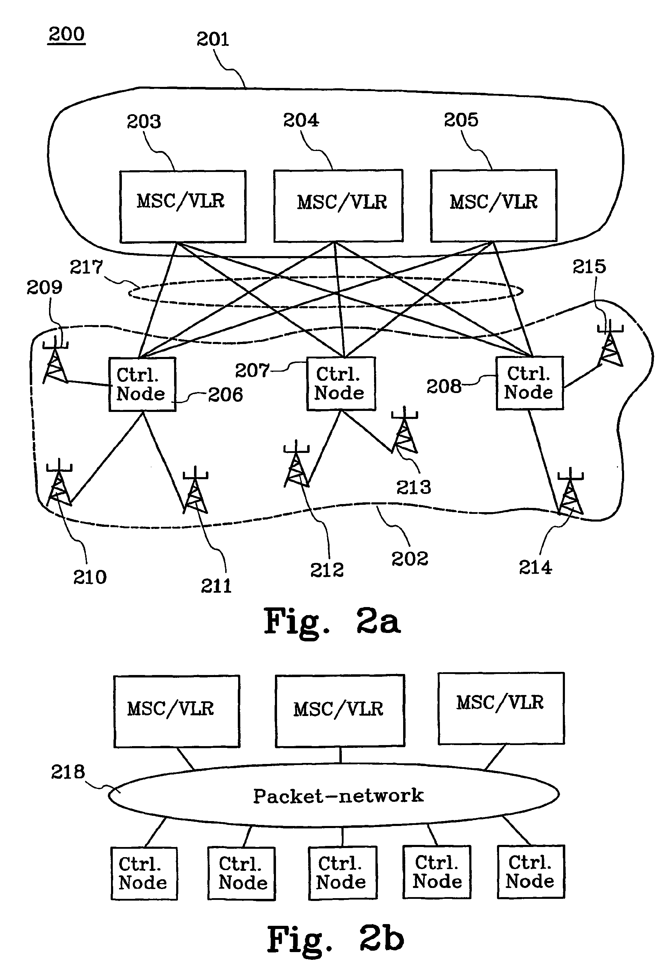

Figure 2a illustrates a simplified view of an example of a cellular radio communication system 200 with an MSC-pool 201, connected to an access network 202. The MSC-pool 201 includes three MSC/VLR's 203-205 (that belongs to the core network). The three MSC/VLR's in the MSC-pool 201 are connected to three control nodes (Ctrl nodes) 206-208 in the access network 202. The control nodes 206-208 can, as an example, be Base Station Controllers in a GSM-system or Radio Network Controllers in a UMTS-system. The control nodes 206-208 are connected to a number of base stations 209-215, i.e. Base Transceiver Stations in a GSM system or Node B's in a UMTS system. Other parts of the access and core network are not illustrated in figure 2a for simplicity. The connection 217 between the MSC/VLR's 203-205 and the control nodes 206-208 can be arranged by circuit connections as illustrated in figure 2a or by a packet network 218, e.g. an IP network, as illustrated in figure 2b. All control nodes 206-208 in the access network 202 can access any one of the MSC/VLR's 203-205 in the MSC-pool 201.

As previously described, each of the control nodes within the MSC-pool service area is connected to all of the MSC/VLR's within the MSC-pool which means that the control nodes can distribute the traffic generated via the radio access over all the MSC/VLR's in the MSC-pool. A traffic distribution based on the known Temporary Mobile Subscriber Identity (TMSI) can be used as a possible distribution mechanism in the control nodes. The use of the TMSI is extended by letting some or all of the bits in the TMSI represent a core network node identity. This is done without affecting the known use of the TMSI to identify the mobile subscribers. Each of the MSC/VLR's in the MSC-pool can, as an example, be given a specific number of the TMSI's that are used in the system, i.e. a unique part of the whole TMSI range in the system. This means that each TMSI will become associated with a specific MSC/VLR. When a mobile station roams into the MSC-pool service area and performs the location updating the first time via the radio access, the control node in charge distributes the location updating to one of the MSC/VLR's in the MSC-pool. When the MSC/VLR receives the location updating from the new mobile station it will register the mobile subscriber in the VLR-part of the MSC/VLR and allocate a TMSI from its own number of TMSI's to the mobile subscriber. Because the mobile station will use the allocated TMSI in radio accesses within the MSC-pool service area, the Control nodes in the MSC-pool service area will be able to forward the traffic to the MSC/VLR where the mobile subscriber has been registered, i.e. the MSC/VLR that has been given (or is associated with) the specific TMSI. The Control nodes will translate the TMSI to an actual MSC/VLR address, e.g. with the help of a table, before they can address the right MSC/VLR. The TMSI is an example of an existing identifier that can be used as Core Network Node Identifier (CNNI) in combination with its original purpose. A completely new identifier that is only used as a CNNI can also be used.

The MSC service area is divided into location areas in which a mobile station can move freely without the need to update location information to the MSC/VLR. A mobile station that moves into a new location area performs a location area update to the MSC/VLR. When the mobile station roams to a new MSC/VLR it changes its location area and performs a location area update to the new MSC/VLR. In case of an MSC-pool, the MSC-pool service area is also divided into a number of location areas that are common to all of the MSC/VLR's in the MSC-pool.

Routing areas are GPRS specific areas in which a GPRS mobile station can move freely without the need to update the routing area information to the SGSN. The size of a routing area can be one cell up to an entire location area. A GPRS mobile station that moves into a new routing area performs a routing area update to the SGSN. If the GPRS mobile station also needs to change SGSN it is called inter-SGSN routing area update. In case of an SGSN-pool, the SGSN-pool serves a number of routing areas that are common to all of the SGSN's in the SGSN-pool.

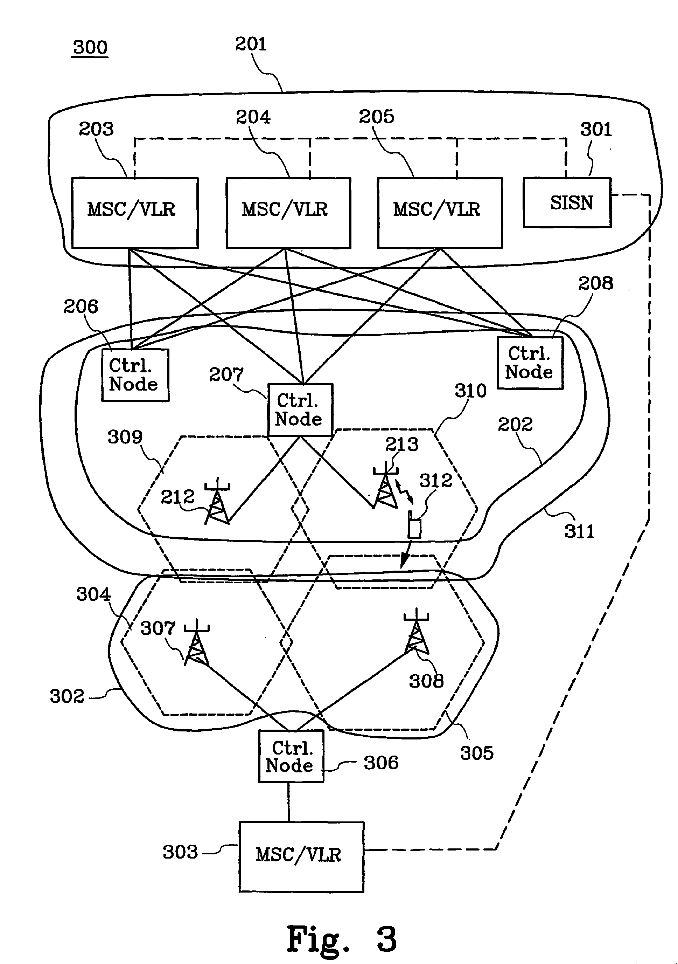

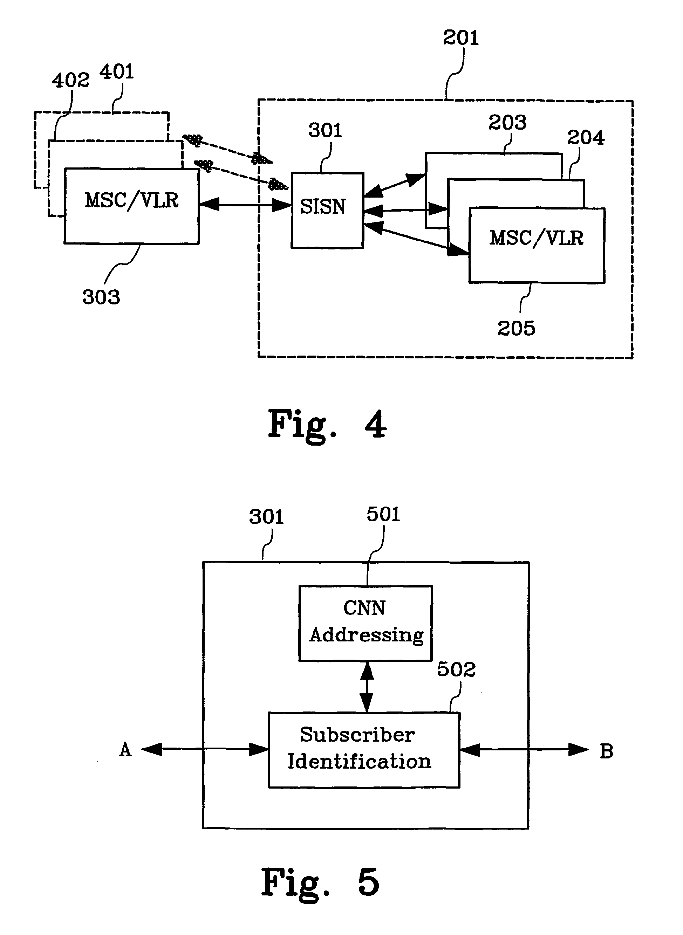

A new logical node, called Subscriber Identification Service Node (SISN), is introduced in the cellular radio communication system. The SISN is illustrated in connection with figure 3 below. The SISN is arranged to represent previous MSC/VLR's in an MSC-pool for the location areas within the MSC-pool service area during roaming to new MSC/VLR's outside the MSC-pool, i.e. it acts as the previous MSC/VLR in the pool. The MSC-pool can also include more than one SISN to distribute the SISN function within the pool. The SISN can also be arranged to represent previous MSC/VLR's in more than one MSC-pool, i.e. it can be dedicated to more than one MSC-pool. This is explained more in connection with figure 4 below. The SISN can also be arranged to represent previous SGSN's in an SGSN-pool for the routing areas within the SGSN-pool.

The SISN can be implemented as one or more physical nodes in the system or as a part of existing nodes, e.g. integrated with one or more MSC/VLR's in an MSC-pool or SGSN's in an SGSN-pool.

The new MSC/VLR will transmit its request of the IMSI to the SISN that is associated with the previous MSC-pool, instead of transmitting its request to any individual MSC/VLR within the MSC-pool. Ordinary Operations and Maintenance (O&M) commands in the MSC/VLR's are used to introduce the address to the SISN in the MSC/VLR's that needs to be able to communicate with the SISN in case of roaming.

The MSC/VLR's outside of the MSC-pool will base the addressing of the SISN on the received information about the previous location area in the same way as if a single MSC/VLR would cover the whole MSC-pool service area. This is because each of the MSC/VLR's within the MSC-pool has been given unique CNNI's. The SISN has a CNNI-address table, where the CNNI's are converted to the addresses of the MSC/VLR's in the MSC-pool. The CNNI-address table of the MSC-pool is administrated with ordinary O&M commands in the SISN. Another possibility is to synchronise a change in the CNNI-address table in the SISN with a change in the distribution of CNNI's between the MSC/VLR's in the MSC-pool.

In case of GPRS, the SGSN's outside of the SGSN-pool will base the addressing of the SISN on the received information about the previous routing area.

Figure 3 illustrates a simplified view of a cellular radio communication system 300 with the MSC-pool 201 and the access network 202, as illustrated in figure 2a, plus an SISN 301 in the MSC-pool 201, one single MSC/VLR 303 outside the MSC-pool 201, one control node 306 and two base stations 307-308. The base stations 209-211 and 214-215 in figure 2a are omitted in figure 3 for simplicity. The base stations 307-308 are connected to the control node 306, which is connected to MSC/VLR 303. The MSC/VLR 303 supports an MSC service area 302 that includes the cells 304 and 305. Base station 307 supports cell 304 and base station 308 supports cell 305. The MSC/VLR 303 and the MSC/VLR's in the MSC-pool 201 are arranged to communicate with the SISN 301, e.g. by MAP signalling (MAP = Mobile Application Part) on no. 7 signalling (TCAP, SCCP and MTP). The carrier of the MAP could also be IP or similar. The SISN 301 is in this case arranged as a stand-alone node in the MSC-pool 201. The MSC-pool service area 311, that is supported by the MSC-pool 201, and the cells that base stations 212 and 213 are supporting inside the MSC-pool service area 311 are also illustrated in figure 3. Base station 212 supports cell 309 and base station 213 supports cell 310. A mobile station 312 is communicating with base station 213 in cell 310. The rest of the cells, base stations, connections etc. within the MSC-pool service area 311 and other parts of the system 300 are not illustrated in figure 3 for simplicity.

Figure 4 illustrates a simplified block diagram of how the SISN 301 can be arranged between the MSC-pool 201 and the MSC/VLR 303. The SISN 301 can also be arranged to communicate with more than one MSC/VLR outside the MSC-pool 201 as illustrated by the dashed blocks 401 and 402.

The MSC-pool can include more than one SISN to distribute the SISN function within the pool. In a first example (not illustrated), each of the SISN's is serving certain location areas within the MSC-pool service area. The MSC/VLR's outside the MSC-pool can address the right SISN based on the information of the previous location area.

In a second example (not illustrated), each of the SISN's is serving different sets of MSC/VLR's outside the MSC-pool. The MSC/VLR's outside the MSC-pool can address "their" SISN independently of each other. The first and second examples could also be combined.

The SISN can also be arranged to represent previous MSC/VLR's in more than one MSC-pool. In this case, the SISN must know to which pool the received identity request is intended to. This can in a first example be solved by using different TMSI ranges for different MSC-pools. The SISN can then find out the right MSC-pool by analysing the received TMSI. This can in a second example be solved by including the location area in the identity request. The SISN can then find out the right MSC-pool by analysing the received location area. This can in a third example be solved by using SISN addresses, which are different for different pools. The SISN can then find out the right MSC-pool by analysing the called address in the received identity request.

The SISN 301 can also be arranged to transfer at least parts of the subscriber information from the previous VLR (e.g. the VLR in MSC/VLR 204) to the new VLR (e.g. the VLR in MSC/VLR 303). This will reduce the load on the HLR and on the signalling network between the new VLR and the HLR.

The SISN can be further arranged to transmit identity requests to and receive identity responses from CNN's in situations where some of the TMSI's are not uniquely identifying a specific CNN. For instance, if a new CNN is connected to the MSC-pool and some of the TMSI's that are used to identify the old CNN's are re-arranged to identify the new CNN. During this change one and the same TMSI might indicate the wrong or more than one CNN before the system and the mobile stations are fully updated. The CNN's can in these cases use the SISN to request for the IMSI from those CNN's in which the subscriber is probably registered.

Figure 5 illustrates a simplified block diagram of an SISN according to the present invention. The SISN includes a CNN Addressing unit 501 (CA-unit) connected to a Subscriber Identification unit 502 (SI-unit). The CA-unit 501 is used for identifying the CNN identity (e.g. to find the CNNI within a TMSI) and to find the right CNN within the pool, e.g. identify the right MSC/VLR. The CA-unit includes the CNNI-address table that enables the SISN to translate each CNN identity to the correct MSC/VLR address.

The SI-unit 502 is used to communicate with the respective MSC/VLR and the CA-unit 501, e.g. to receive the identity request, forward the CNNI to the CA-unit, receive the CNN address from the CA-unit and forward the identity request to the previous CNN. It also relays the identity response from the previous CNN back to the requester (i.e. the new CNN). The address to the new CNN, which is received with the identity request from the new CNN, is stored in the SISN so that the SI-unit can identify and address the new CNN when it relays the identity response from the previous CNN. If the CNNI is embedded in e.g. a TMSI, the whole TMSI is forwarded to the CA-unit, which identifies the CNNI part of the TMSI. The SI-unit 502 is also responsible to supervise the response to the identity request. If no response is received within a pre-defined time (defined e.g. by O&M), the SI-unit 502 will respond to the requesting MSC/VLR, that the subscriber identity was not found.

The SISN can as an alternative include an Identifier Administration unit (IA-unit), not illustrated, where the whole TMSI O&M for the CNN-pool is implemented. This means that the MSC/VLR's within the MSC-pool will get their CNNI's, e.g. specific parts of the TMSI range, from the SISN. The IA-unit in the SISN will also keep the control nodes in the access network updated on the latest allocation of the CNNI's so that they can address the right CNN.

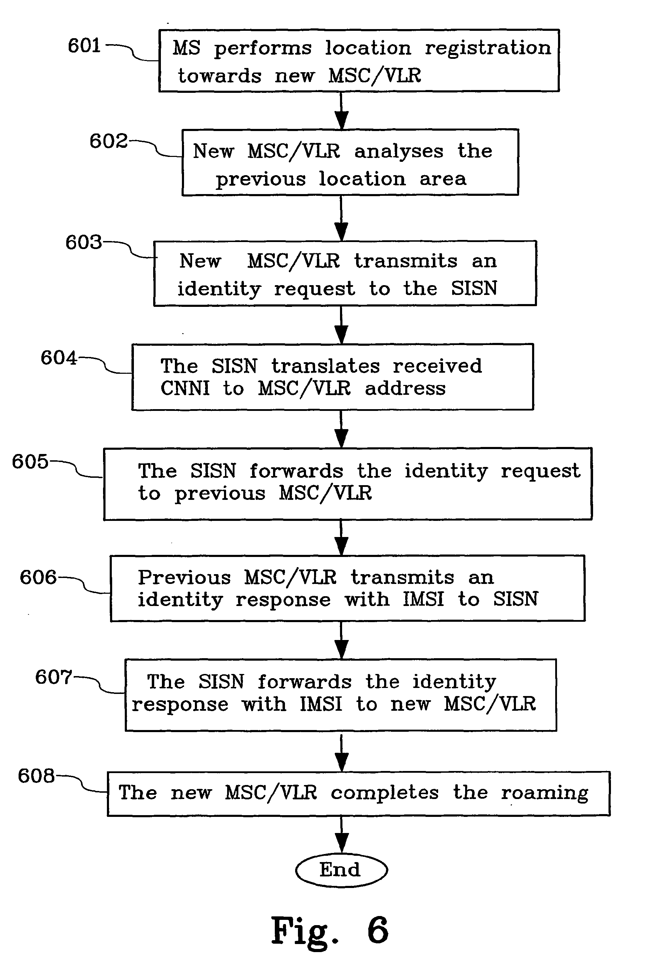

Figure 6 illustrates a flowchart of a first embodiment of the method according to the present invention. The method is applied in the system that is illustrated in figure 3. This means that there will be references to figure 3 as well as to figure 6. The mobile station 312 moves from MSC-pool service area 311 to the MSC service area 302 (an arrow illustrates the direction of the movement in figure 3). The mobile station is in stand by mode, i.e. powered on but not involved in any active communication session (such as a voice call or a data transfer). The mobile subscriber that uses the mobile station is currently registered in MSC/VLR 204.

According to a step 601 in figure 6, the mobile station 312 performs a location registration to the MSC/VLR 303 via base station 308 and control node 306. In the location registration the mobile station will indicate its previous location area as well as the TMSI allocated in the previous location area. The MSC/VLR 303 is now the new MSC/VLR.

According to a step 602, the MSC/VLR 303 analyses the received previous location area. This is made to detect from which MSC/VLR the mobile subscriber is roaming from. In this case the analysis will indicate the SISN 301 as the mobile subscriber is roaming from the MSC-pool 201. The connection between the location area and the SISN 301 is controlled by ordinary O&M commands in the MSC/VLR 303 and can as an example be made in a table.

According to a step 603, the MSC/VLR 303 transmits an identity request to the SISN 301 that includes the TMSI received from the mobile station 312.

According to a step 604, the SISN 301 translates the received TMSI to an MSC/VLR address within the MSC-pool 201 with the help of the CNNI-address table. In this case it will be the address to MSC/VLR 204. The whole TMSI is used as the CNNI in this embodiment. The SISN 301 also stores the address to the MSC/VLR 303. This address is included in the identity request.

According to a step 605, the SISN 301 forwards the identity request (received from the MSC/VLR 303) to the MSC/VLR 204, i.e. the previous MSC/VLR. The SISN has changed the address of the MSC/VLR 303 to its own address in the identity request.

According to a step 606, the MSC/VLR 204 transmits an identity response with the real identity, i.e. the IMSI, to the SISN 301 after it has identified the subscriber with the help of the TMSI included in the identity request received from the SISN 301.

According to a step 607, the SISN 301 forwards the received identity response from the MSC/VLR 204 (with the IMSI) to the MSC/VLR 303, i.e. to the new MSC/VLR. The identity request procedure is now completed and the MSC/VLR 303 has identified the mobile subscriber.

According to a step 608, the MSC/VLR 303 contacts the HLR to complete the roaming procedure, e.g. by obtaining subscriber information from the HLR. The new MSC/VLR must know the IMSI to be able to find the correct HLR and to obtain the right subscriber information from the HLR.

If the system uses a CNNI that is not included in the TMSI, the same steps as above can be used although the CNNI is transmitted separately together with the TMSI in the identity request.

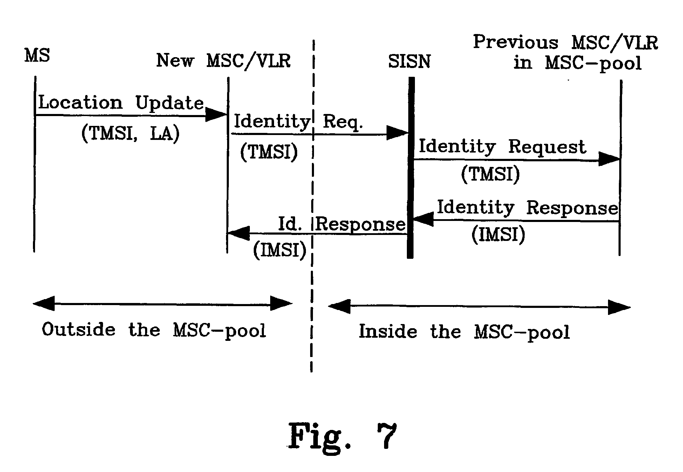

Figure 7 illustrates signalling between the mobile station 312 (MS), the MSC/VLR 303 (the new MSC/VLR), the SISN 301 and the MSC/VLR 204 (the previous MSC/VLR).

If no response is received from the MSC/VLR 204 in the MSC-pool, i.e. step 606 is not performed, the SISN replies to the MSC/VLR 303, that the subscriber identity was not found. This can as an example trigger an identity request procedure between the MSC/VLR 303 and the mobile station 312, where the mobile station transmits the IMSI over the radio interface. A timer is used in the SISN to determine how long it should wait for a reply from MSC/VLR 204. This timer is started when the request is forwarded in step 605.

It is possible to use the SISN to collect authentication information from the previous MSC/VLR. This can for instance be made just before or during step 608 or as a separate operation. It is also possible to use the SISN to transfer at least parts of the subscriber information from the previous VLR (e.g. the VLR in MSC/VLR 204) to the new VLR (e.g. the VLR in MSC/VLR 303). This transfer can for instance be made in parallel with steps 606-607, between steps 607-608, during step 608 or as a separate operation.

If the SISN includes the IA-unit, the SISN will generate a TMSI distribution plan, distribute the TMSI ranges to each MSC/VLR in the pool and update the control nodes in the access network according to the TMSI distribution plan.

The SISN could also be used to facilitate a move of subscriber registrations from one MSC/VLR to another within the same MSC-pool, e.g. when an MSC/VLR is to be taken out for service or to arrange a different load distribution between the MSC/VLR's in the pool. This makes it possible for the other MSC/VLR's in the pool to get hold of the subscriber identification in a secure way, i.e. without communication with the mobile stations over the air-interface.

The inventive roaming process described here is similar in UMTS. This means that the SISN and the method described here is also applicable for UMTS systems mutatis mutandis.

In general, the SISN is arranged to forward messages (e.g. requests for specific information) between a third core network node (arranged outside a first pool of CNN's) and a first core network node (arranged in the first pool of CNN's). This means that the third core network node "outside" the pool only need to be able to identify the SISN and not one of the core network nodes in the first pool when needed, e.g. during/after roaming.

As previously stated, SGSN's in systems with GPRS can also be arranged in pools. The SISN can in this case forward messages between a third SGSN (arranged outside an SGSN pool) and a first SGSN (arranged in the SGSN pool). An inter-SGSN routing area update is performed when a subscriber moves from a routing area controlled by an SGSN in an SGSN-pool to a routing area controlled by an SGSN outside the SGSN-pool. The SGSN, arranged outside the SGSN-pool, does only need to identify and communicate with the SISN and not one of the SGSN's in the pool when performing the inter SGSN routing area update. The SISN identifies (e.g. by using the P-TMSI instead of the TMSI) and handles the communication with the right SGSN in the pool in line with the MSC/VLR routing embodiment described in connection with figure 6 above. Other types of information exchange between SGSN's, arranged outside the SGSN-pool, and SGSN's, in the pool, can also be made via the SISN.

The invention can be completely or partially implemented as software in at least one microprocessor.

## Claims

1. A method for supporting roaming of a mobile station (312) from a first service area (311) of a radio communication system, said first service area (311) being served by a pool (201) of core network nodes (203, 204, 205), into a second service area (302) supported by a third core network node (303), said mobile station (312) performing a location registration to the third core network node (303), said method being performed by a subscriber Identification service node (301), SISN, and being
**characterized in that** it comprises the steps of
- receiving (603) from the third core network node (303) an identity request that includes a temporary mobile subscriber identity, TMSI, of the mobile station (312);
- determining (604) an identity of a first core network node (203) within the pool (201) of core network nodes (203, 204, 205), said mobile station (312) being registered at said first core network node (203);
- transmitting (605) a request for an international mobile subscriber identity, TMSI, to the first core network node (203), said request comprising the TMSI;
- receiving (606) in response to the request the IMSI; and
- forwarding (607) the IMSI to the third core network node (303).

2. Method according to claim 1, wherein the step of determining (604) the identity of the first core network node (203) comprises the step of translating the received TMST to a core network node address by means of an address table.

3. Method according to claim 1 or 2, wherein the identity request comprises a first address of the third core network node (303), and wherein the step of transmitting the request (605) comprises the steps of
- changing in Lhe identity request the first address towards an address of the SISN (301); and
- forwarding the changed identity request.

4. Method according to claim 1, 2 or 3, wherein the IMSI is received in an identity response, and wherein the step of forwarding (607) the IMSI comprises the step of forwarding the received identity response.

5. Method According to any of the previous claims, wherein the SISN (301) serves certain location areas within the first service area served by the pool (201).

6. Method according to any of the previous claims, wherein the SISN (301) serves different sets of core network nodes outside the pool (201).

7. Method according to any of the previous claims, wherein the SISN (301)
- serves a plurality of pools (201); and
- uses different TMSI-ranges for different pools (201).

8. Subscriber identification service node (301), SISN, **characterized in that** it is adapted to perform the method according to any of claims 1 to 7.

9. Subscriber identification service node (301) according to claim 8, being implemented as one or more physical nodes in a radio communication system.

10. Subscriber identification service node (301) according to claim 8 or 9, being integrated within one or more MSC/VLRs in an MSC-pool or SCSN's in an SGSN-pool.

11. Subscriber identification service node (301) according to claim 8, 9 or 10, comprising a core network node addressing unit (501) connected to a subscriber identification unit (502), wherein said core network node addressing unit (501) is adapted to identify a core network node identity based on the TMSI and to find a core network node in the pool.

12. Subscriber identification service node (301) according to any of claims 8 to 11, wherein the core network node addressing unit (501) includes a core network node address table that enables the SISN to translate each core network node identity to a correct core network node address.

## Patentansprüche

1. Verfahren zur Unterstützung von Roaming einer Mobilstation (312) aus einem ersten Versorgungsbereich (311) eines Funkkommunikationssystems, wobei der erste Versorgungsbereich (311) durch einen Pool (201) von Kernnetzknoten (203, 204, 205) versorgt wird, in einen zweiten Versorgungsbereich (302), der von einem dritten Kernnetzknoten (303) unterstützt wird, wobei die Mobilstation (312) eine Aufenthaltsregistrierung bei dem dritten Kernnetzknoten (303) ausführt, wobei das Verfahren durch einen Teilnehmeridentifizierungs-Dienstknoten (Subscriber Identification Service Node) (301), SISN, ausgeführt wird und **dadurch gekennzeichnet ist, dass** es die folgenden Schritte umfasst:
- Empfangen (603) einer Kennungsanforderung, welche eine temporäre Mobilfunk-Teilnehmerkennung (Temporary Mobile Subscriber Identity), TMSI, der Mobilstation (312) enthält, von dem dritten Kernnetzknoten (303);
- Bestimmen (604) einer Kennung eines ersten Kernnetzknotens (203) innerhalb des Pools (201) von Kernnetzknoten (203, 204, 205), wobei die Mobilstation (312) bei dem ersten Kernnetzknoten (203) registriert ist;
- Senden (605) einer Anforderung für eine internationale Mobilfunk-Teilnehmerkennung (International Mobile Subscriber Identity), IMSI, an den ersten Kernnetzknoten (203), wobei die Anforderung die TMSI umfasst;
- Empfangen (606) der IMSI in Erwiderung auf die Anforderung; und
- Weiterleiten (607) der IMSI zu dem dritten Kernnetzknoten (303).

2. Verfahren nach Anspruch 1, wobei der Schritt des Bestimmens (604) der Kennung des ersten Kernnetzknotens (203) den Schritt des Übersetzens der empfangenen TMSI in eine Kernnetzknoten-Adresse mittels einer Adresstabelle umfasst.

3. Verfahren nach Anspruch 1 oder 2, wobei die Kennungsanforderung eine erste Adresse des dritten Kernnetzknotens (303) umfasst und wobei der Schritt des Sendens der Anforderung (605) die folgenden Schritte umfasst:
- Ändern der ersten Adresse in der Kennungsanforderung in eine Adresse des SISN (301); und
- Weiterleiten der geänderten Kennungsanforderung.

4. Verfahren nach Anspruch 1, 2 oder 3, wobei die IMSI in einer Kennungsantwort empfangen wird und wobei der Schritt des Weiterleitens (607) der IMSI den Schritt des Weiterleitens der empfangenen Kennungsantwort umfasst.

5. Verfahren nach einem der vorhergehenden Ansprüche, wobei der SISN (301) gewisse Aufenthaltsbereiche innerhalb des ersten Versorgungsbereiches, der von dem Pool (201) versorgt wird, versorgt.

6. Verfahren nach einem der vorhergehenden Ansprüche, wobei der SISN (301) verschiedene Mengen von Kernnetzknoten außerhalb des Pools (201) versorgt.

7. Verfahren nach einem der vorhergehenden Ansprüche, wobei der SISN (301)
- mehrere Pools (201) versorgt; und
- für unterschiedliche Pools (201) unterschiedliche TMSI-Bereiche verwendet.

8. Teilnehmeridentifizierungs-Dienstknoten (Subscriber Identification Service Node) (301), SISN, **dadurch gekennzeichnet, dass** er dafür eingerichtet ist, das Verfahren nach einem der Ansprüche 1 bis 7 auszuführen.

9. Teilnehmeridentifizierungs-Dienstknoten (301) nach Anspruch 8, der als ein oder mehrere physikalische Knoten in einem Funkkommunikationssystem implementiert ist.

10. Teilnehmeridentifizierungs-Dienstknoten (301) nach Anspruch 8 oder 9, der in eine oder mehrere MSC/VLRs in einem MSC-Pool oder SGSN's in einem SGSN-Pool integriert ist.

11. Teilnehmeridentifizierungs-Dienstknoten (301) nach Anspruch 8, 9 oder 10, der eine Kernnetzknoten-Adressierungseinheit (501) umfasst, die mit einer Teilnehmeridentifizierungseinheit (502) verbunden ist, wobei die Kernnetzknoten-Adressierungseinheit (501) dafür eingerichtet ist, eine Kernnetzknoten-Kennung anhand der TMSI zu identifizieren und einen Kernnetzknoten in dem Pool zu finden.

12. Teilnehmeridentifizierungs-Dienstknoten (301) nach einem der Ansprüche 8 bis 11, wobei die Kernnetzknoten-Adressierungseinheit (501) eine Kernnetzknoten-Adresstabelle enthält, welche den SISN in die Lage versetzt, jede Kernnetzknoten-Kennung in eine korrekte Kernnetzknoten-Adresse zu übersetzen.

## Revendications

1. Procédé pour supporter le déplacement itinérant d'une station mobile (312) depuis une première zone de desserte (311) d'un système de communication radio, ladite première zone de desserte (311) étant desservie par un groupe (201) de noeuds de réseau central (203,204,205), vers une seconde zone de desserte (302) supportée par un troisième noeud de réseau central (303), ladite station mobile (312) effectuant un enregistrement de position sur le troisième noeud de réseau central (303), ledit procédé étant mis en oeuvre par un noeud de desserte d'identification d'abonné (301), SISN, et étant
**caractérisé en ce que** il comprend les étapes consistant à :
- recevoir (603) en provenance du troisième noeud de réseau central (303) une demande d'identité qui inclut une identité d'abonné mobile temporaire, TMSI, de la station mobile (312) ;
- déterminer (604) une identité d'un premier noeud de réseau central (203) à l'intérieur du groupe (201) des noeuds de réseau central (203,204,205), ladite station mobile (312) étant enregistrée au niveau dudit premier noeud de réseau central (203) ;
- transmettre (605) une demande d'une identité d'abonné mobile internationale, IMSI, au premier noeud de réseau central (203), ladite demande comprenant la TMSI ;
- recevoir (606) l'IMSI en réponse à la demande ; et
- acheminer (607) l'IMSI vers le troisième noeud de réseau central (303).

2. Procédé selon la revendication 1, dans lequel l'étape consistant à déterminer (604) l'identité du premier noeud de réseau central (203) comprend l'étape de traduction de la TMSI reçue en une adresse de noeud de réseau central au moyen d'une table d'adresse.

3. Procédé selon la revendication 1 ou 2, dans lequel la demande d'identité comprend une première adresse du troisième noeud de réseau central (303) et dans lequel l'étape de transmission de la demande (605) comprend les étapes consistant à :
- modifier dans la demande d'identité la première adresse en une adresse du SISN (301) ; et
- acheminer la demande d'identité modifiée.

4. Procédé selon la revendication 1,2 ou 3, dans lequel l'IMSI est reçue dans une réponse d'identité et dans lequel l'étape d'acheminement (607) de l'IMSI comprend l'étape d'acheminement de la réponse d'identité reçue.

5. Procédé selon une quelconque des revendications précédentes, dans lequel le SISN (301) dessert certaines zones de localisation à l'intérieur de la première zone de desserte desservie par le groupe (201).

6. Procédé selon une quelconque des revendications précédentes, dans lequel le SISN (301) dessert différents jeux de noeuds de réseau central à l'extérieur du groupe (201).

7. Procédé selon une quelconque des revendications précédentes, dans lequel le SISN (301)
- dessert une pluralité de groupes (201) ; et
- utilise différentes plages de TMSI pour différents groupes (201).

8. Noeud de desserte d'identification d'abonné (301), SISN, **caractérisé en ce que** il est adapté afin de mettre en oeuvre le procédé selon une quelconque des revendications 1 à 7.

9. Noeud de desserte d'identification d'abonné (301) selon la revendication 8, étant implémenté comme un ou plusieurs noeuds physiques dans un système de communication radio.

10. Noeud de desserte d'identification d'abonné (301) selon la revendication 8 ou 9, étant intégré dans un ou plusieurs MSC/VLRs dans un groupe MSC ou SGSN's dans un groupe SGSN.

11. Noeud de desserte d'identification d'abonné (301) selon la revendication 8,9 ou 10, comprenant une unité d'adressage de noeud de réseau central (501) connectée à une unité d'identification d'abonné (502), dans lequel ladite unité d'adressage de noeud de réseau central (501) est adaptée afin d'identifier une identité de noeud de réseau central sur la base de la TMSI et de trouver un noeud de réseau central dans le groupe.

12. Noeud de desserte d'identification d'abonné (301) selon une quelconque des revendications 8 à 11, dans lequel l'unité d'adressage de noeud de réseau central (501) inclut une table d'adresse de noeud de réseau central qui permet au SISN de traduire chaque identité de noeud de réseau central en une adresse de noeud de réseau central correcte.
